# EUROPÄISCHE PATENTSCHRIFT

(11) **EP 0 865 820 B1**
(45) Veröffentlichungstag und Bekanntmachung des Hinweises auf die Patenterteilung: **13.08.2003**
(21) Anmeldenummer: 98104828.3
(22) Anmeldetag: 17.03.1998
(51) Int. Cl.: B01J 19/18, C08F 6/00, B01J 19/20, B01J 19/00, B01F 7/16

(54) **Reaktor für chemische Umsetzungen**
Reactor for chemical conversions
Réacteur pour conversions chimiques

(30) Priorität: 17.03.1997 DE 19711020
(43) Veröffentlichungstag der Anmeldung: 23.09.1998
(73) Patentinhaber: BASF AKTIENGESELLSCHAFT, 67056 Ludwigshafen (DE)
(72) Erfinder: Rupaner, Robert F., Dr., 61476 Kronberg (DE); Lawrenz, Sven, 68161 Mannheim (DE); Bauer, Gerhard, Dr., 69469 Weinheim (DE)
(74) Vertreter: Kinzebach, Werner, Dr.

(56) Entgegenhaltungen:
- EP-A- 0 000 512
- EP-A- 0 191 877
- GB-A- 2 054 646
- US-A- 4 277 585
- US-A- 4 324 868

## Beschreibung

Die Erfindung betrifft einen Reaktor für chemische Umsetzungen, insbesondere einen Reaktor für Polymerisationszwecke, insbesondere für die Emulsions-, Suspensions-, Lösungs- und/oder Massepolymerisation.

Die Herstellung von Polymerisaten durch Flüssigphasenpolymerisation wird üblicher-weise in Substanz-, Lösungs-, Fällungs-, Suspensions- und Emulsionspolymerisation unterteilt, wobei sich die Emulsions- und Suspensionspolymerisation von den anderen Verfahren dadurch unterscheiden, dass sie bereits mit einer zweiphasigen Ausgangsmischung beginnen. Die Polymerisationsreaktion wird dabei entweder im Batch-Reaktor, im kontinuierlichen Strömungsrohr, in der Rührkesselkaskade oder im kontinuierlichen Rührkesselreaktor durchgeführt. Die Kesselreaktoren haben in der chemischen Industrie dabei die größte Bedeutung erlangt, da sie eine große Flexibilität bezüglich der Betriebsbedingungen und der Betriebsweise aufweisen und an fast alle Prozeßerfordernisse angepaßt werden können. Rührkesselreaktoren eignen sich für diskontinuierliche und kontinuierliche Betriebsweise und sie besitzen einen weiten Einsatzbereich, der vom Laborkessel bis zum Großreaktor reicht. Rührkesselreaktoren sind in standardisierter Bauweise für zahlreiche Anwendungen in den verschiedensten Werkstoffen und Werkstoffkombinationen erhältlich.

Neben den üblichen Kühl- und Heizvorrichtungen, Zu- und Ableitungen für Reaktionsedukte und -produkte weisen die Reaktorbehälter Rührvorrichtungen auf, die meist aus einem über eine Rührwelle angetriebenen Rührer bestehen und für gewisse Anwendungen zudem Statoren aufweisen, die zur besseren Durchmischung als Stromstörer dienen. Die Rührer selbst sind an meist senkrechten Rührerachsen befestigt, welche entweder von unten oder von oben in den im allgemeinen zylindrischen Reaktorbehälter hineinragen. Der zentrische Einbau von oben in den Reaktorbehälter wird gemäß dem Stande der Technik im allgemeinen bevorzugt, da die Abdichtung der Rührerwelle relativ einfach durchgeführt werden kann. Nachteilig ist dabei, dass die Rührerwelle aufgrund der auftretenden Biegemomente einen relativ großen Durchmesser aufweisen muß. Die Rührereinführung von unten in den Reaktor reduziert dagegen die Rührermasse, erfordert aber gleichzeitig eine aufwendigere Abdichtung der Rührwelle beim Durchtritt durch den Reaktorboden.

Es ist bekannt, viele verschiedene Aufgaben in der Verfahrenstechnik unter Zuhilfenahme von Rührvorrichtungen zu lösen. Zu derartigen Aufgaben gehören beispielsweise Dispergieren, Homogenisieren, Vermischen, Begasen, Wärmeübertragung, Suspendieren und Lösen. Je nach systemspezifischen Parametern, wie Viskosität, Ein- und Mehrphasigkeit, Dichte und Dichteunterschieden, Teilchengrößen, Scherung, Wärmeentwicklung und Reaktionstemperatur, bestehen komplizierte theoretische Zusammenhänge der Wärmeübertragung und Fluiddynamik, denen durch eine Vielzahl von bereits vorgeschlagenen, speziell konstruierten Rührer- und Reaktorformen Rechnung getragen werden soll. Um die Verfahren sicherer durchführen zu können, wurden auch weiterhin spezielle Techniken, wie halbkontinuierlicher Zulauf der Stoffströme angewandt, wodurch die Wärmefreisetzung besser kontrolliert werden soll. In der Literatur finden sich eine Vielzahl von Empfehlungen, die zu jedem auftretenden Problem eine entsprechende Problemlösung in Form von besonderen apparativen Ausgestaltungen (z. B. Rührertyp), von Festlegung der Parameter (z. B. Drehzahl oder Dimensionierung) oder von Rezepturangaben und besonderen Maßnahmen (z. B. Verwendung von Lösungsmitteln zur Viskositätskontrolle und als Wärmeübertragungsmedium, Kontrolle der Polymerisationstemperatur und/oder der Zugabe der Stoffströme) geben. Zum weiteren Studium der Rührtechnik in Reaktoren sowie der damit einhergehenden Phänomene der Wärmeübertragung und der Erkenntnisse der Strömungsvorgänge sei auf die am Ende der Beschreibung zitierte Literatur verwiesen.

In [11] (siehe die Aufstellung am ende der Beschreibung) sind in der Einleitung (S.282 - 285) einige Beispiele für industrielle Reaktoren und die bei ihrer Betreibung auftretenden Probleme angegeben.

In [17] wird der Einfluß einiger technologischer Parameter auf den Verlauf der Emulsionspolymerisation des Styrol-Butylacrylat-Acrylsäure-Systems untersucht. Es wurde gefunden, dass die Zugabe der Monomeremulsion über ein Rohr durch den Deckel des Reaktors in den Raum zwischen dem unteren Blatt des Rührers und dem Boden des Reaktors, die Koagulatbildung verringert. Dagegen wurde aber eine Zunahme des Restmonomerenanteils und eine größere Streuung der Teilchengröße, was eine schlechtere Reproduzierbarkeit bedeutet, beobachtet.

Nach einer einmal erfolgten Installation eines Reaktors werden in diesem häufig eine Vielzahl von unterschiedlichen Produkten hergestellt. Das bedeutet, dass das System in der Regel nur für den Auslegungsfall das Optimum darstellt und abgeändert werden muß, wenn ein anderes Produkt hergestellt werden soll. Unter den bekannten Polymerisationsreaktoren und Rührvorrichtungen finden sich zwar schon Ausführungsformen, die eine Umrüstung auf ein anderes Polymerisationsverfahren, beispielsweise durch Austausch der Rührblätter, mit verhältnismäßig geringem Aufwand gestatten. Es besteht aber immer noch ein Mangel an Konstruktionen, die eine wesentlich einfachere und schnellere und damit kostengünstigere Umrüstung und Reinigung des Polymerisationsreaktors beim Übergang auf ein anderes Produktionsverfahren ermöglichen.

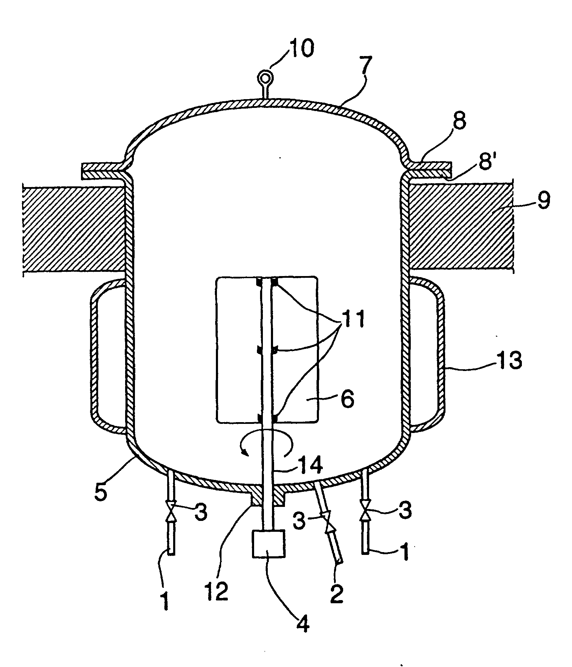

Es ist auch schon bekannt, Rührer von unten in den Reaktor einzubauen (s. DE 44 21 949, Spalte 3, Z. 7 - 18 [13]). Der Figur 1 der DE 44 21 949 ist auch ein am Boden des Reaktionsgefäßes angebrachter Ablauf zu entnehmen. Die Zuläufe werden von oben in den Reaktor eingebracht. Ein derartiger Reaktor ist relativ aufwendig zu reinigen.

Der Erfindung liegt daher die Aufgabe zugrunde, einen Reaktor für chemische Umsetzungen bereitzustellen, der es erlaubt, ohne großen zeitlichen und finanziellen Aufwand eine Annäherung an das verfahrenstechnische Optimum bei der jeweils durchgeführten Umsetzung, beispielsweise bei einem Polymerisationsverfahren zu erreichen. Er soll zudem hohe Flexibilität in Bezug auf die Umstellung der Anlage auf andere Polymerisationsverfahren aufweisen.

Überraschenderweise wurde nun gefunden, dass diese Aufgabe durch einen Reaktor für chemische Umsetzungen gelöst wird, bei dem das Rührwerk und die Zu- und Ableitungen am Reaktorboden angebracht sind.

Gegenstand der Erfindung ist demgemäß ein Reaktor für chemische Umsetzungen mit einem Rührwerk, Zu- und Ableitungen und einem abnehmbaren Deckel, der dadurch gekennzeichnet ist, dass sowohl das Rührwerk als auch die Zu- und Ableitungen am Reaktorboden angebracht sind.

Unter "Rührwerk" soll hier eine Rührvorrichtung verstanden werden, die einen oder mehr als einen Rührer umfaßt.

Unter "Zuleitungen" und "Ableitungen" sollen hier sowohl Leitungen für Stoffströme wie Edukte oder Produkte als auch elektrische und andere Leitungen für beispielsweise Temperatursensoren, pH-Meßvorrichtungen, Druckmeßvorrichtungen, Konzentrationsbestimmungssonden, optische Analyseinstrumente oder andere on-line-Analyseinstrumente verstanden werden.

Die Vorteile, die mit dem erfindungsgemäßen Reaktor erzielt werden, sind mannigfaltiger Art:

Nach Entfernen des Deckels ist der Innenraum des Reaktors leicht zugänglich. Das erleichtert eine durchzuführende Reinigung und ermöglicht einen einfachen und schnellen Rührblattwechsel. Die Reinigung von Rührblatt, Rührachse, Einbauten und insbesondere Reaktorinnenwand, -boden und -deckel von Wandbelägen und Anbakkungen, die je nach Polymerzusammensetzung sehr hart, aber auch sehr weich bis zähelastisch und mehrere Zentimeter dick sein können, gestaltet sich sehr einfach, wenn der Deckel abgenommen und zur Seite geschoben werden kann. Dies ist besonders wichtig bei Emulsionspolymerisations-Reaktionen scherempfindlicher Produkte, weil es dabei in Bereichen hoher Scherung, z. B. am Rührer oder an Einbauten, zu besonders starken Ablagerungen kommt, die den Wärmedurchgang stark vermindern und die Funktion der Sensoren (z. B. Temperaturkontrolle) beeinträchtigen.

Die durch die Erfindung gebotene Möglichkeit, das Rührwerk in einfacher Weise und rasch auszuwechseln, ist ein wesentlicher Vorteil, weil in einem Polymerisationsreaktor in der Regel unterschiedliche Produkte, Formulierungen oder Mischungen mit unterschiedlicher Viskosität, Scherempfindlichkeit, Verschmutzungsneigung und Farbe hergestellt und zubereitet werden. Ein anderes Beispiel ist die Herstellung von Polymerisatdispersionen mit z. B. besonderen Haftgruppen, um bei Applikationen auf z. B. Metall wirksame Adhäsion an Substraten zu erzeugen. Derartige Produkte haften natürlich auch sehr gut an der Reaktorwandung und führen zu einem erhöhten Reinigungsbedarf.

Gebräuchliche Rührer sind ein- oder mehrstufige Ausführungsformen, insbesondere solche, die neben einer tangentialen Strömungskomponente auch ein axiales Strömungsfeld erzeugen. Bevorzugte Rührer sind solche mit 1 bis 7 auf der axialen Rührwelle angebrachten Rührblattstufen mit vorzugsweise äquidistantem Abstand, z. B. Blatt-, Anker-, Impeller-, Pfaudler-, Scheiben-, Wendel-, Balken-, Finger-, Propeller-, Sigma-, Schaufel- oder Schrägblatt-, Koaxial- und Scheibenrührer sowie entsprechende mehrstufige Rührer, wie Kreuzbalken-, Mehrstrom-, Mehrimpulsgegenstrom (MIG)-, INTERMIG- und INTERPROP-Rührer (vgl. [4]). Bei den mehrstufigen Rührern kann durch Veränderung der Abstände der Rührerstufen und/oder der Winkel gegeneinander entsprechend Einfluß auf die fluiddynamischen Anforderungen und Wärmeabfuhrproblematik der jeweiligen Reaktion genommen werden. In der Literatur werden für unterschiedliche Viskositäten, Wärmefreisetzungen und Strömungsververhältnisse unterschiedliche Rührer empfohlen. Eine Übersicht über Rührertypen finden sich z. B. in [4] auf Seite RS2,3 und [7] auf Seite 92 ff. Doppelblattrührer mit verschiedenen Konstruktionsbeispielen sind in [14] und [15] beschrieben.

Nach bevorzugten Ausführungsformen enthält der erfindungsgemäße Reaktor Rührerkombinationen wie Koaxial-, MIG- oder Doppelblattrührer oder auch Anker-Blatt-Kombinationen oder sehr wandgängige Rührer wie Wendel- oder Ankerrührer.

Die Rührblätter sind an der zentralen Rührachse vorzugsweise durch Schraubverbindungen befestigt. Nach dem Lösen dieser Schraubverbindungen können die Rührblätter in einfacher Weise nach oben, z. B. mit Hilfe einer Zugvorrichtung, aus dem Reaktor entfernt und durch andere Blätter ersetzt werden.

Glatte Rührblätter mit abgerundeten Kanten und Ecken sollten dann verwendet werden, wenn eine Herabsetzung der Scherwirkung gewünscht ist.

Zum Rühren kleiner Substanzmengen ist die Bodengängigkeit des Rührers besonders wichtig. Im Falle von Wendel- und Koaxialrührern kann die Form des Rührers an die Reaktorwölbung angepaßt werden. Bei mehrstufigen Rührern ist es möglich, ein kleines, ggf. im Außenbereich an die Reaktorwandkrümmung angepaßtes Rührblatt zu verwenden. Beim Ablassen des Produktes wird damit auch der letzte Rest noch ausreichend gerührt und vermischt ("Zwangspassage einer Scherzone").

Auch besondere Anordnungen, wie z. B. mehrere Rührer im Behälter, kommen erfindungsgemäß in Betracht. In diesem Falle ist auch eine Abweichung vom zentrosymmetrischen Einbau des Rührwerks möglich. Diese Anordung ist vorteilhaft hinsichtlich der erzeugbaren Turbulenz des fluiden Systems. Wenn Strombrecher verwendet werden sollen, so können diese an der Reaktorwand oder am Deckel angebracht werden. Bei einer Montage am Deckel bietet sich der Vorteil der leichten Entfernbarkeit.

Für den Einbau eines Rührers von unten in den Reaktor ist eine sogenannte Unterniveau-Rührwerkskonstruktion notwendig. Hierzu erweist sich die Anwendung einer doppelt wirkenden Unterniveau-Gleitringdichtung als vorteilhaft, insbesondere der Typ LRD 44, der in der Literaturstelle [10] für Polymerisationsreaktoren genannt und auch in [4] auf Seite DS 6 beschrieben wird. Die Gleitringdichtung kann mit Produkt oder einer in dem Reaktionsbehälter enthaltenen Komponente geschmiert bezw. abgedichtet werden, was erreichen läßt, dass kein produktfremdes Gleitmittel in das Endprodukt gelangt.

Konstruktion und Auslegung von Rührmotor und -getriebe sind dem Fachmann bekannt (s. [4]). Verwendet wird ein Motor mit ausreichender Leistung, um auch höherviskose Materialien rühren zu können. Die Umdrehungszahl des Rührers ist beispielsweise im Bereich 0 - 200 UpM (Umdrehungen pro Minute) variierbar und einstellbar.

wegen des Einbaus des Rührwerks und des Anschlusses der Zu- und Ableitungen im Reaktorboden bleibt der Raum unterhalb des Deckels frei von Konstruktionsteilen, die verschmutzen oder verkleben oder beschädigt werden könnten. Aus diesem Grunde kann der erfindungsgemäße Polymerisationsreaktor nahezu vollständig gefüllt werden.

Auftretender Schaum wird einfach zerdrückt. Auch bei nicht vollständig gefülltem Reaktor wurde im Vergleich mit konventionellen Reaktionsbehältern nur geringe Neigung zur Schaumbildung gefunden. Ursache dafür ist der Umstand, dass keine Fluidoberfläche von Metallteilen wie Rührblättern oder Rührerachsen durchstoßen wird, so dass der Gaseinzug minimiert wird.

Wenn in dem erfindungsgemäßen Reaktor Emulsionspolymerisationen durchgeführt werden, ist der Zufluß der Monomeren in reiner oder emulgierter Form von unten durch den Reaktorboden deshalb vorteilhaft, weil 1. der Dichteunterschied zwischen der wäßrigen Phase und den meisten Monomeren dazu führt, dass bei der Phasentrennung die Ölphase nach oben steigt und damit das Reaktionsmedium und insbesondere die Scherzone durchströmt, weil 2. die einfließende Monomeremulsion nicht auf die Rührblätter fällt und also nicht durch die auftretenden Zentrifugalkräfte an die Reaktorwand geworfen wird und dort zu Wandbelagsbildung führen kann, und weil 3. das schonende Einfließen in die Reaktionsmischung infolge des schnellen Konzentrations- und Temperaturausgleichs ein schnelles Einmischen bewirkt und nur wenig Schaumbildung verursacht. Diese Vorteile ergeben sich auch dann, wenn die Rührerkonstruktion auf konventionelle Art durch den Reaktordeckel eingebracht wird.

Ein typischer Polymerisationsreaktor für technische Zwecke ist ein Edelstahl-Druckbehälter (Autoklav) entsprechender Wandstärke, die im allgemeinen einem Druck von mindestens 6 bar standhält. Bevorzugt werden Reaktoren, die auf 25 bar ausgelegt sind. Die Innenwand und alle Einbauten, so auch der Rührer, sind vorzugsweise glatt poliert, elektropoliert oder emailliert. Besonders bervorzugt werden Edelstahlausführungen mit elektropolierter Oberfläche. Unter Einbauten versteht man auch Strömungsbrecher oder andere Arten von Leitstromstörern, Leitbleche, Thermoelemente, Sensoreneinstülpungen, Heiz- oder Kühlvorrichtungen.

Der erfindungsgemäße Reaktor hat im typischen Falle eine zylindrische Form mit gewölbtem Klöpper- oder Korbboden. Das Verhältnis von Höhe der Wölbung zu Durchmesser des Deckels beträgt dabei von 1:1 bis 10:1 und vorzugsweise 1,2:1 bis 6:1. Besonders bevorzugt liegt dieses Verhältnis im Bereich von 1,4:1 bis 3:1. Der Boden kann auch eben ausgebildet sein. Das Volumen des Reaktors ist nicht kritisch, es kann von 0,8 m³ bis 200 m³ betragen. Bevorzugt wird eine Größe von 1 bis 50 m³.

Am Boden des Reaktors kann auch eine Vorrichtung zur Probenahme angebracht sein. Wenn der Reaktor mit anderen Reaktions- oder nachfolgenden Konditionierungsbehältern verbunden werden soll, kann es erforderlich sein, mehrere Ableitungen anzubringen. Jede Ableitung enthält im allgemeinen ein Filtrationssieb.

Der Reaktordeckel ist bei der einfachsten Bauart mittels eines einfachen Verbindungsflansches an das Reaktorgefäß angeflanscht. Zwischen Reaktordeckel und Reaktorkörper liegen Dichtungseinrichtungen. Der Deckel wird je nach Druckbereich mit ausreichenden Mengen an Schraubverbindungen befestigt. Als Dichtungen kommen beispielsweise einfache Flachdichtungen, O-Ringe, Mehrfach-Lippendichtungen, Delta- oder Kompaktdichtungen aus Materialien in Frage, die der jeweiligen Reaktionsmischung standhalten. Derartige Materialien sind dem Fachmann ausreichend bekannt. Eine Auswahl sind beispielsweise Dichtungen aus Elastomeren (AcrylnitrilButadien, Silikon, SB oder Chlorbutadien), Polyethylen, Teflon, Gummi, Kautschuk oder Weichmetall. Eine Übersicht über Dichtungsarten, Dichtungsmaterialien und Verschlußkonstruktionen findet sich in den Literaturstellen [8] und [9]. Zur einfachen Abdichtung, d. h. dem Zusammenpressen der Dichtung, wird der Reaktionsbehälter evakuiert, d. h. für die nachfolgende Reaktion inertisiert, und dabei der Deckel nochmals angezogen. Je nach der durchzuführenden Reaktion kann dann der Reaktor mit neuer Gasmischung (Luft, Stickstoff, Reaktionsgas, Kohlendioxid u.s.w.) gefüllt werden. Er kann auch evakuiert betrieben werden.

Neben den einfachen Flanschverbindungen eignen sich auch kompliziertere Verschlußtechniken, die hinsichtlich Sicherheit und Betriebsweise und insbesondere hinsichtlich des zeitlichen Aufwandes des Öffnens und Wiederverschließens vorteilhaft sind. Dazu gehören Schnellverschlüsse, deren Verschlußmechanismus durch eine Drehbewegung greift. Hierfür geeignete Dichtungsformen sind z. B. O-Ring-Dichtungen. Gemäß einer weiteren Ausführungsform wird ein Bajonettverschluß angewandt, bei dem der Deckel durch eine anhebende Drehbewegung gegenüber dem Reaktorkörper gelöst werden kann. Hierbei kommen vorzugsweise unterhalb des Reaktorflansches angebrachte Dichtungen zum Einsatz, die durch den übergreifenden Flansch des Deckels bei Vergrößerung des Reaktorinnendruckes immer stärker abdichten. Auch Schnappverschlüsse eignen sich, d. h. übergreifende Halterungen, die durch Federkraft oder ähnliches einen Anpreßdruck erhalten und senkrecht dazu zum Zusammenpressen der Dichtung führen. Ein einfacher Dichtungsflansch findet aber den Vorzug.

Zur Temperaturregulierung und -einstellung sind eine Reihe von Systemen brauchbar. In den Reaktionsraum eingelassene Heiz- und/oder Kühlschlangen (Wärmetauscher innerhalb des Reaktors) bieten zwar hohe Wärmeübertragung, sind jedoch in der Regel schwierig zu reinigen, können sehr hohe Scherung und damit Koagulatbildung verursachen sowie nicht durchmischte Bereiche, auch "Totwasserzonen" genannt, aufweisen und die Rührerdimensionierung im Reaktorinneren einengen.

Zu bevorzugen sind daher außen angebrachte Kühlmäntel, mit denen der Reaktor ggf. im Wechselspiel aufgeheizt oder abgekühlt werden kann. Es kann sich dabei um eine echte Doppelmantel-Reaktorausführung oder auch um auf den Reaktormantel aufgeschweißte Taschen oder Rohre handeln, die von dem Kühlmedium durchströmt werden.

Eine Ausführungsform des beschriebenen Reaktors enthält im Deckel einen weiteren Anschluß für einen Siedekühler. Dieser ist in der Lage, je nach ausgelegter Größe eine wirksame Menge Reaktionswärme aus dem System abzuführen, indem das siedende Gemisch im Inneren kondensiert wird. Der Rücklauf aus dem Rührer kann direkt in den Reaktor zurückfließen oder über eine Zwangsführung frischen, in den Reaktor einzuspeisenden Reaktionsstoffen zugeführt werden.

Auch die Ausschleusung eines Teils des Reaktionsmediums und Abkühlung über einen Wärmetauscher stellt eine wirksame Kühlmethode dar (vgl. [12]).

Der erfindungsgemäße Reaktor wird vorzugsweise für Flüssigphasen-Polymerisationsreaktionen, wie Substanz-, Lösungs-, Fällungs-, Suspensions- oder Emulsionspolymerisation, einschließlich Mini-, Mikro- und inverse Emulsionspolymerisation, verwendet. Unter Polymerisationsreaktionen werden hier auch Polykondensationen und Polyadditionen verstanden. Bei solchen handelt es sich vorzugsweise um exotherme Reaktionen, die isotherm durchgeführt werden, was bedingt, dass die Reaktionswärme abgeführt werden muß. Außerdem werden derartige Reaktionen bei bestimmten, definierten und eigenschaftsbestimmenden Temperaturen durchgeführt, d. h. das Reaktionsmedium muß in der Regel vor Reaktionsbeginn auf die Reaktionstemperatur aufgeheizt werden. Der Behälter kann bei geeigneter Wahl des Rührblatts auch für andere Zwecke verwendet werden, die eine intensive Durchmischung voraussetzen, z. B. für die Herstellung von Lösungen, Emulsionen, die Nachbearbeitung von Produktdispersionen und -suspensionen, für die Konfektionierung und zum Vermischen von flüssigen Komponenten bzw. Produkten.

Der erfindungsgemäße Reaktor wird vorzugsweise für Polymerisationszwecke, beispielsweise für Emulsionspolymerisationsreaktionen verwendet. Bevorzugt ist die Herstellung von ein- oder mehrstufigen Polymerisaten, die auf Homo- oder Copolymerisaten verschiedener Verbindungsklassen basieren, von denen nachfolgend einige beispielhaft erwähnt werden:

Ethylenisch ungesättigte Monomere, insbesondere C₂-C₂₀-α-Olefine, wie Ethylen und Propylen, vinylaromatische Verbindungen, wie Styrol, α-Methylstyrol oder Vinyltoluole, C₁-C₁₂-Alkylvinylether, wie Methyl- oder Ethylvinylether, Vinylester von C₁-C₁₈-Monocarbonsäuren, wie Vinylacetat oder Vinylpropionat, Ester von α,β- ethylenisch ungesättigten Mono- oder Dicarbonsäuren, wie Acryl-, Methacryl- oder Maleinsäure, mit C₁-C₁₂-Alkanolen, wie Methanol, Ethanol, n-Propanol, iso-Propanol, 1-Butanol, 2-Butanol, iso-Butanol, tert.-Butanol und 2-Ethylhexanol, Acrylnitril, Methacrylnitril, Vinylchlorid, Vinylidenchlorid, Butadien, Isopren, α,β-ethylenisch ungesättigte C₃-C₆-Mono- und Dicarbonsäuren, wie Acrylsäure und Methacrylsäure und deren Amide, wie Acrylamid und Methacrylamid, und deren N-Methylolverbindungen.

Vorteilhaft lassen sich Styrol-Butadien-Dispersionen, Styrol-Acrylat-Dispersionen oder Acrylat-Dispersionen herstellen, insbesondere solche mit breiter Teilchengrößenverteilung und/oder mit einer Viskosität von 30 bis 500 mPas.

Bevorzugte Polymerisate sind
- Homo- oder Copolymerisate der Acrylsäure- und Methacrylsäureester, insbesondere von Methyl-, Ethyl-, Butyl-, Ethyl-hexyl-acrylat, Hydroxyethyl- und Hydroxypropyl-acrylsäureester und -methacrylsäureester
- Homo- oder Copolymerisate des Styrols mit Butadien und/oder (Meth)acrylnitril und/oder den erwähnten (Meth)acrylsäureestern
- Homo- oder Copolymerisate des Vinylacetates und/oder Vinylpropionates mit Ethylen, Butadien oder den erwähnten (Meth)acrylsäureestern
- Homo- oder Copolymerisate des Vinylchlorids und/oder Vinylidenchlorids mit den erwähnten (Meth)acrylsäureestern, Olefinen oder Vinylaromaten
- Homo- oder Copolymerisate der Acrylsäure, Methacrylsäure oder Maleinsäure mit anderen Säuren oder Säureanhydriden wie Maleinsäure(-anhydrid), (Meth)Acrylamid und/oder Olefinen.

Die Polymerisationstemperatur beträgt üblicherweise 30 bis 140 °C. Zur Einleitung der Emulsionspolymerisation werden die gebräuchlichen wasserlöslichen Radikalbildner in einer Menge von vorzugsweise 0,05 bis 3 Gew.-%, bezogen auf die Monomerphase, eingesetzt. Beispiele für Radikalbildner sind Peroxide, wie Ammoniumperoxodisulfat, Kaliumperoxodisulfat, Wasserstoffperoxid, Mono- oder Diacylperoxide, Alkylhydroperoxide und Azoverbindungen. Die Initiierung kann entweder direkt durch Temperaturerhöhung oder durch Einsatz von Reduktionsmitteln erfolgen (Redoxsysteme).

Als Dispergiermittel können die bei der Emulsionspolymerisation gebräuchlichen ionischen und nichtionischen Emulgatoren oder Schutzkolloide eingesetzt werden. Vorzugsweise werden 0,1 bis 5,0 Gew.-% Emulgator, bezogen auf die Monomerphase, eingesetzt. Gegebenenfalls können zur Polymerisation noch Puffersubstanzen, wie Natriumcarbonat, Natriumhydrogenphosphat oder Alkaliacetate, Polymerisationsregler, wie Mercaptane, oder vernetzend wirkende Monomere, wie Bisacrylate oder N-Methylol(meth)acrylamide, eingesetzt werden.

Die Polymerisation kann kontinuierlich oder diskontinuierlich, mit oder ohne Verwendung von Saatlatices, unter Vorlage aller oder einzelner Bestandteile des Reaktionsgemisches oder unter teilweiser Vorlage und zulauf der oder einzelner Bestandteile des Reaktionsgemisches oder nach einem Anlaufverfahren ohne Vorlage durchgeführt werden.

Eine chemische Nachbehandlung oder Konfektionierung oder eine Behandlung einer Polymerdispersion mit Wasserdampf, Kohlendioxid oder anderen gasförmigen Komponenten kann sich in üblicher Weise anschließen.

Die Figur zeigt einen erfindungsgemässen Polymerisationsreaktor, der in eine Bodenöffnung einer Anlage eingehängt ist. Er weist einen gewölbten Boden 5 auf, der mit zwei Zuleitungen 1 und einer Ableitung 2 ausgerüstet ist. Die Zu- und Ableitung der Produkte erfolgt dabei über Ventile 3. In den Boden ist ein mit einem Antriebsmotor 4 versehener Blattrührer 6 eingebracht. Die Rührblätter sind dabei über Montagevorrichtungen 11 mit der Welle 14 des Rührers verbunden. Der zylindrische Reaktor ist mit einem gewölbten Deckel 7 verschlossen, der eine Halterung 10 zum Entfernen des Deckels aufweist. Der Deckel ist mit einem umlaufenden Flansch 8 versehen, der auf dem entsprechenden umlaufenden Flansch 8' des zylindrischen Teils des Reaktors aufliegt. Die Abdichtung erfolgt über eine zwischen den Flanschen 8 und 8' eingebrachte Dichtung.

### Beispiele:

- Emulgator 1:: 20 gew.-%ige Lösung eines p-Octylphenolethoxilates mit 25 mol Ethylenoxid
- Emulgator 2:: 35 gew.-%ige Lösung eines Natriumsalzes des sulfatierten p-Nonylphenolethoxilates mit 25 mol Ethylenoxid

### Beispiel 1

Der Versuch wird in einem 18 m³ Reaktor gemäß der Figur mit h/D=2,1 (Verhältnis Höhe/Durchmesser), versehen mit einem 4 stufigem MIG-Rührer (d/D = 0,85 Verhältnis Rühredurchmesser/Reaktordurchmesser) mit um 90 °C gegeneinander verdrehten Rührblattstufen und 43 UpM durchgeführt. Eine Vorlage bestehend aus 2200 kg Wasser und 10 kg Ascorbinsäure wird auf 80 °C erhitzt. Bei Erreichen von 70 °C Innentemperatur werden 200 kg Natriumpersulfatlösung (2,5 gew.-%ig) durch eine Zuleitung 1 zugegeben. Danach wird begonnen, die Monomeremulsion ME1 kontinuierlich in 210 min. und 1740 kg Natriumpersulfallösung in 240 min. durch getrennte Zuleitungen 1 zuzugeben, wobei man die Innentemperatur auf 85 °C ansteigen läßt. Während der Zugabe wird die Mantelkühlung bis an die Kühlgrenze beansprucht. Nach vollständiger Zugabe wird 2 h bei 85 °C gehalten, abgekühlt, mit Ammoniak-Lösung neutralisiert und über ein 250 µm Filter filtriert. Es wird eine koagulatfreie Dispersion mit einem Feststoffanteil von 55,3 %, einem pH von 7,5, einem LD-Wert von 49 %, einer Viskosität von 78 mPas und einem Feinkoagulatanteil von 0,001 % erhalten. Die Teilchengrößenverteilung ist tetramodal. Es findet sich kein Wandbelag.

| Zusammensetzung von ME1: | |
|---|---|
| 1900 kg | Wasser |
| 970 kg | Emulgator 1 |
| 700 kg | Emulgator 2 |
| 194 kg | Acrylsäure |
| 1160 kg | Acrylnitril |
| 8315 kg | Butylacrylat |

### Beispiel 2:

Beispiel 1 wird im gleichen Reaktor mit dem Unterschied wiederholt, dass ein Zulauf bestehend aus Acrylnitril und Butylacrylat und ein zweiter, wäßriger Zulauf bestehend aus Wasser, Acrylsäure, Emulgatoren und Natriumpersulfat (Mengenverhältnisse wie im Beispiel 1 angegeben) von unten dem Reaktor zugeführt wird. Die beiden Ströme werden kurz vor Reaktoreintritt vermischt. Dabei wird die Rührerdrehzahl auf 45 UpM und die Zulaufzeit auf 180 min gesteigert. Der wässrige Zulauf wird 15 min langsamer zugefahren. Nach vollständiger Zugabe wird 2 weitere Stunden bei Polymerisationstemperatur gehalten, gekühlt und von gebildetem Koagulat filtriert. Es wird eine Dispersion vom Feststoffanteil von 55,3 % und pH-Wert von 7,8 erhalten. Die Teilchengrößenverteilung und Viskosität ist nicht signifikant von Beispiel 1 verschieden.

### Beispiel 3:

Im Reaktor aus Beispiel 1 wird mit 43 UpM ein Gemisch aus 1980 kg Wasser und 11 kg Ascorbinsäure auf 82 °C erhitzt. Bei Erreichen von 70 °C Innentemperatur werden 230 kg Natriumpersulfatlösung (2,5 gew.-%ig) von unten zugegeben. Danach wird begonnen, den Zulauf der Monomeremulsion ME3 kontinuierlich in 5,5 h und 730 kg Natriumpersulfatlösung (7 gew.-%ig) in 6 h von unten zuzugeben. Während der Zuläufe wird die Mantelkühlung bis an die Kühlgrenze beansprucht. Nach vollständiger Zugabe wird 2,5 h bei Polymerisationstemperatur gehalten und über ein 250 µm Filter filtriert. Nach Abfiltrieren von rund 3 kg Koagulat wird eine Dispersion mit einem Feststoffanteil von 64,9 %, einem pH von 4,5, einem LD-Wert von 34, einer Viskosität von 227 mPas und einem Feinkoagulatanteil von 0,003 % erhalten. Die Reaktorwand ist wandbelagsfrei. Die Teilchengrößenverteilung ist trimodal.

| Zusammensetzung von ME3: | |
|---|---|
| 1915 kg | Wasser |
| 750 kg | Emulgator 2 |
| 227 kg | Acrylsäure |
| 567 kg | Acrylnitril |
| 794 kg | Vinylacetat |
| 9956 kg | Butylacrylat |

### Beispiel 4:

Beispiel 3 wird wiederholt mit der Abänderung, dass die erhaltene Dispersion nach vollständiger Zufuhr der Zuläufe 2,5 h nachpolymerisiert wird und dabei 270 kg 10 gew.-%ige tert.-Butylhydroperoxidlösung und nach 5 min. eine Lösung von 170 kg 10 gew.-%ige Lösung von Natriumhydroxymethylsulfinsäure (Rongalit C) in 1 h von unten zugegeben werden. Danach liegt der Anteil an Restmonomeren in Summe unter 500 ppm. Die Teilchengrößenverteilung ist trimodal.

### Stand der Technik:

[1] Ullmanns, Encyclopedia of Industrial Chemistry, 5. Auflage, Volume B2, Kapitel 25
[2] Ullmann, 5.Auflage, Bd. B4., S. 121 ff. und S. 167 ff. (Überblick über industriell verwendete Reaktoren)
[3] Ullmann, 5. Auflage, Bd. A21, S. 389, rechts
[4] Firmenschrift EKATO; Handbuch der Rührtechnik, (1990)
[5] Chem. Ing. Techn. 51 (1979) S. 430 - 436 (Rühren von dünnflüssigen und mittelviskosen Medien)
[6] Chem. Ing. Techn. 47 (1975), S. 953 - 996 (Auslegung und Maßstabvergrößerungen von Rührapparaten)
[7] H. P. Wilke u. a. "Rührtechnik", Hüthig-Verlag, Heidelberg, (1991)
[8] E. Schmidt u. a., Handbuch der Dichtungstechnik, Expert-Verlag, Grafenau/Württemberg (1981)
[9] Dubbel, Taschenbuch für den Maschinenbau, W. Beitz und K.H. Küttner, Springer-Verlag, Berlin, 17. Auflage, Kap. 2.10, S. K17 - K19
[10] A. Kläß u. a., Rührwerks-Gleitringdichtungen für den Einsatz in der chemischen Industrie, in "Handbuch Dichtungen" Faragallah-Verlag, Sulzbach/Ts. (1990), S. 654-664
[11] Verfahrenstechnische Berechnungsmethoden, Teil 5: Chemische Reaktoren; VCH Weinheim (1987), Kap. 15, Polymerisationsreaktoren
[12] US 2 989 517
[13] DE 44 21 949
[14] JP 07 292 002
[15] WO 9 322 350
[16] Adolf Echte, Handbuch der technischen Polymerchemie, Verlag Chemie, Weinheim (1993), S. 464 - 465
[17] A. Matejicek et al., Chem. Prum. 37(3) (1987) 144-147 (C.A. 106:176 933)

## Patentansprüche

1. Polymerisationsreaktor mit Rührwerk, Zu- und Ableitungen und abnehmbarem Deckel, **dadurch gekennzeichnet, dass** sowohl alle Rührer als auch alle Zu- und Ableitungen am Reaktorboden angebracht sind.

2. Polymerisationsreaktor nach Anspruch 1, **dadurch gekennzeichnet, dass** die Rührer eine Koaxial-, MIG-, Doppelblatt- oder Anker-Blattrührer-Kombination sind.

3. Polymerisationsreaktor nach Anspruch 1, **dadurch gekennzeichnet, dass** die Rührer Wendel- oder Ankerrührer sind.

4. Polymerisationsreaktor nach einem der vorhergehenden Ansprüche, **dadurch gekennzeichnet, dass** die Rührer Blatt-, Turbinen- oder Propellerrührer sind.

5. Verwendung eines Polymerisationsreaktors nach einem der Ansprüche 1 bis 4 für Emulsions-, Suspensions-, Lösungs-, Masse- und/oder Fällungspolymerisationen.

## Claims

1. A polymerisation reactor comprising a stirring mechanism, incoming and outgoing lines and a removable lid, **characterized in that** all stirrers and all incoming and outgoing lines are installed on the reactor floor.

2. The polymerisation reactor of claim 1, **characterized in that** the stirrers are a coaxial, MIG, double blade or anchor/blade stirrer combination.

3. The polymerisation reactor of claim 1, **characterized in that** the stirrers are helical stirrers or anchor stirrers.

4. The polymerisation reactor of one of the proceeding claims, **characterized in that** the stirrers are blade, turbine or propeller stirrers.

5. The use of the polymerisation reactor of one of claims 1 to 4 in emulsion, suspension, solution, bulk and/or precipitation polymerisation reactions.

## Revendications

1. Réacteur de polymérisation muni d'un dispositif d'agitation, d'entrées et de sorties et d'un couvercle amovible, **caractérisé par le fait qu'**aussi bien tous les agitateurs que toutes les entées et sorties sont installées au fond du réacteur.

2. Réacteur de polymérisation selon la revendication 1, **caractérisé par le fait que** les agitateurs sont une combinaison d'agitateurs coaxiaux, multi-étages à contre-courant, à double pale ou à plaque d'armature.

3. Réacteur de polymérisation selon la revendication 1, **caractérisé par le fait que** les agitateurs sont des agitateurs hélicoïdaux ou des agitateurs à armature.

4. Réacteur de polymérisation selon l'une des revendications précédentes, **caractérisé par le fait que** les agitateurs sont des agitateurs à plaque, à turbine ou à hélice.

5. Utilisation d'un réacteur de polymérisation selon l'une des revendications 1 à 4 pour des polymérisations en émulsion, en suspension, en solution, en masse et/ou par précipitation.
